Europäisches Patentamt

European Patent Office    (11) Numéro de publication :    **0 107 246**
Office européen des brevets    **B1**

(12)    # FASCICULE DE BREVET EUROPÉEN

(45) Date de publication du fascicule du brevet :
02.03.88

(51) Int. Cl.⁴ : **H 04 B 3/23**

(21) Numéro de dépôt : **83201466.6**

(22) Date de dépôt : **13.10.83**

(54) **Récepteur pour modem de transmission de données, comportant un annuleur d'écho et un égaliseur.**

(30) Priorité : **15.10.82 FR 8217289**

(43) Date de publication de la demande :
**02.05.84 Bulletin 84/18**

(45) Mention de la délivrance du brevet :
**02.03.88 Bulletin 88/09**

(84) Etats contractants désignés :
**BE CH DE FR GB IT LI NL SE**

(56) Documents cités :
**EP-A- 0 048 515**
**CONFERENCE ON COMMUNICATIONS EQUIPMENT AND SYSTEMS, 20-22 avril 1982, pages 65-69, Birmingham, GB, P.J. VAN GERWEN et al.:"A digital transmission unit for the local network"**
**SECOND INTERNATIONAL CONFERENCE ON TELE-COMMUNICATION TRANSMISSION - INTO THE DIGITAL ERA, 17-20 mars 1981, pages 197-200, IEEE, Londres, GB, M.G. VRY et al.:"Digital signal transmission to the subscriber using A 1+1 system"**
**IEEE TRANSACTIONS ON COMMUNICATIONS, vol. COM-24, no. 9, septembre 1976, pages 956-962, New York, US, K.H. MUELLER.:"A new digital echo canceler for two-wire full-duplex data transmission"**

(73) Titulaire : **TELECOMMUNICATIONS RADIOELECTRIQUES ET TELEPHONIQUES T.R.T.**
**88, rue Brillat Savarin**
**F-75013 Paris (FR)**

(72) Inventeur : **Brie, Richard**
**SOCIETE CIVILE S.P.I.D. 209 rue de l'Université**
**F-75007 Paris (FR)**
Inventeur : **Guidoux, Loic, Bernard Yves**
**SOCIETE CIVILE S.P.I.D. 209 rue de l'Université**
**F-75007 Paris (FR)**

(74) Mandataire : **Chaffraix, Jean et al**
**Société Civile S.P.I.D. 209, rue de l'Université**
**F-75007 Paris (FR)**

## Description

L'invention concerne un récepteur utilisé dans un modem de transmission de données pour restituer, à partir du signal en bande de la voie réception, le signal de données transmis par le modem distant, ce récepteur comportant un annuleur d'écho muni d'un dispositif de traitement réglable comprenant au moins un filtre transversal et recevant un signal de la voie émission, un égaliseur autoadaptatif muni d'un filtre transversal recevant le signal de données restitué par le circuit de décision du récepteur, un circuit de soustraction pour soustraire dudit signal en bande de base de la voie réception les signaux de copie d'écho et de copie d'interférences engendrés dans l'annuleur d'écho et l'égaliseur, et des moyens pour échantillonner le signal de sortie du circuit de soustraction selon une première fréquence répondant au théorème de Shannon vis à vis du signal à traiter par le modem et un circuit de récupération d'horloge de données reçues, recevant le signal échantillonné.

Un récepteur de ce genre est décrit dans l'article de P. J. Van Gerwen et N. A. M. Verhoeckx, intitulé « A Digital Transmission Unit for the Logical Network » et paru dans Conference on Communications Equipment and Systems, 20 au 22 avril 1982, Birmingham (GB).

Dans ce récepteur connu, la totalité du traitement numérique du signal est effectuée à une fréquence d'échantillonnage correspondant au double de la fréquence de transmission des données de manière à permettre la récupération de l'horloge après annulation de l'écho et égalisation du signal reçu.

Le choix de cette fréquence double est lié au codage des données en NRZ. Si l'on prend un autre codage, par exemple le codage biphase, le spectre s'étend sur une bande de fréquence 0-2F (où F est la fréquence de transmission des données), ce qui impose selon le théorème de Shannon une fréquence d'échantillonnage de 4F.

Une telle fréquence de 4F peut impliquer des cadences de traitement très élevées, ce qui impose d'utiliser des composants spécialisés coûteux et consommant plus d'énergie.

La présente invention propose un récepteur de ce genre qui évite dans une certaine mesure l'utilisation de composants spécialisés en haute fréquence.

Pour cela, un récepteur du genre mentionné dans le préambule est remarquable en ce qu'une première fréquence fixe la cadence d'apparition du signal de copie d'écho, tandis qu'une deuxième fréquence inférieure à la première fixe la cadence d'apparition du signal de copie d'interférence.

La demanderesse a en effet constaté qu'il n'est pas indispensable de former le signal de copie d'interférence avec une fréquence d'échantillonnage aussi élevée que celle utilisée pour former le signal de copie d'écho et que, malgré tout, on obtient rapidement la convergence de l'ensemble, ce qui se traduit par une horloge récupérée stable et l'annulation des signaux d'écho et d'interférences ; ce résultat est assez surprenant, compte tenu de l'étroite dépendance des fonctionnements du circuit de récupération d'horloge, de l'annuleur d'écho et de l'égaliseur qui sont dans ce récepteur commandés à partir du même signal.

La description suivante en regard des dessins annexés, le tout donné à titre d'exemple fera bien comprendre comment l'invention peut être réalisée.

La figure 1 est un schéma d'un modem de transmission de données dans lequel est incorporé le récepteur conforme à l'invention.

La figure 2 est un schéma d'un mode de réalisation du récepteur conforme à l'invention.

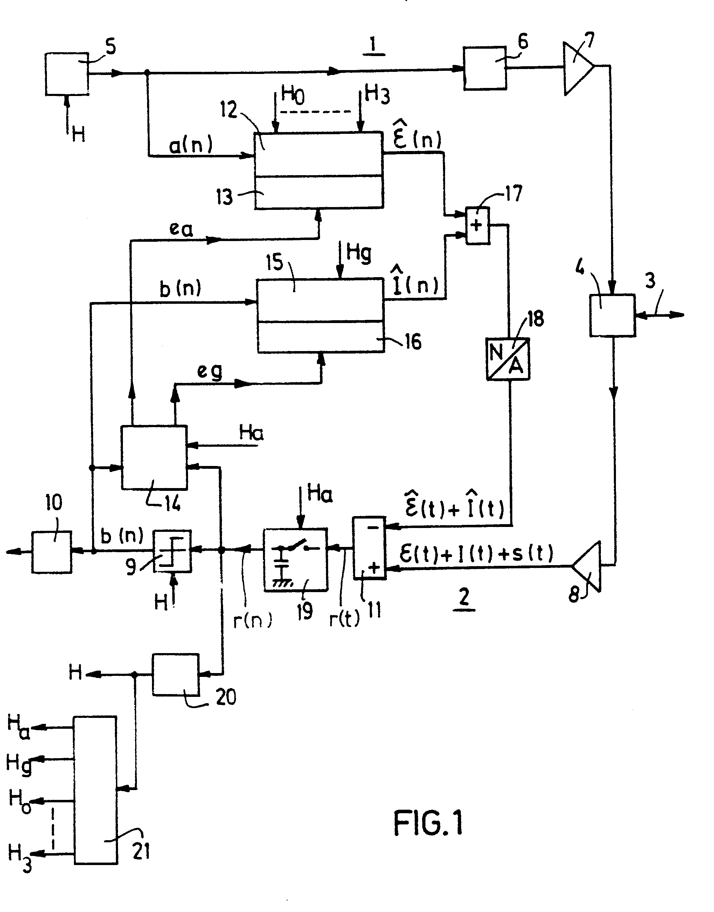

La figure 1 montre la structure d'un modem de transmission de données en bande de base, dont le récepteur est muni d'un annuleur d'écho et d'un égaliseur. Ce modem comporte une voie unidirectionnelle d'émission 1 et une voie unidirectionnelle de réception 2, qui sont couplées à une ligne de transmission bidirectionnelle 3 par l'intermédiaire du circuit de couplage 4.

La voie d'émission 1 est connectée à une source de données 5 qui fournit des données à une fréquence F = 1/T déterminée par le signal d'horloge H. Ces données peuvent être à deux niveaux ou du type multiniveaux, c'est-à-dire à plus de deux niveaux. Elles sont généralement appliquées, comme le représente la figure, à un codeur 6 produisant un signal dont le spectre est plus adapté à la transmission et à la récupération de l'horloge dans le mode distant, que le signal de données initial. Dans le cas de données à deux niveaux, le codage effectué dans le codeur 6 peut être un codage biphase selon lequel les données de valeur « 1 » sont représentées par le signal d'horloge H de fréquence F et les données de valeur « 0 » sont représentées par le complément de ce signal d'horloge. Un tel signal codé en biphase à deux niveaux, ne comporte pas de composante à la fréquence zéro et la majeure partie de son énergie est concentrée dans la bande de fréquence s'étendant jusqu'à 2F. Le codage effectué dans le codeur 6 peut être aussi un codage pseudoternaire faisant correspondre à un signal de données à deux niveaux, un signal à trois niveaux positif, négatif et nul. Avec un signal codé dans le code bipolaire d'ordre 1 qui est un cas particulier de code pseudoternaire, la majeure partie de l'énergie est concentrée dans la bande s'étendant jusqu'à la fréquence F. Le signal sortant du codeur 6 est amplifié dans l'amplificateur d'émission 7 avant d'être appliqué à l'accès émission du circuit de couplage 4. Le signal de données ainsi traité dans la voie d'émission 1 est transmis vers le moden distant non représenté, via la ligne de transmission 3.

Le signal de données émis de la même manière par le modem distant est reçu dans le modem local représenté sur la figure et il est dirigé par le circuit de couplage 4, vers l'entrée de la voie réception 2 de ce

0 107 246

modem. Dans cette voie réception le signal reçu est d'abord amplifié dans l'amplificateur de réception 8, puis dirigé vers le circuit de décision 9 du récepteur, qui opère à la fréquence d'horloge F = 1/T pour restituer un signal de données dépendant des données émises par le modem distant. Le circuit de décision 9 peut ainsi restituer un signal multiniveaux ou un signal à deux niveaux codé en biphase si à l'émission les données ont été codées en biphase ou un signal à deux niveaux non codé si à l'émission les données à deux niveaux n'ont pas été codées ou ont été codées en pseudoternaire. Le signal de données restitué par le circuit de décision 9 peut éventuellement être décodé dans un décodeur 10, avant son utilisation.

Au signal utile de données (t) provenant du modem distant et apparaissant à la sortie de l'amplificateur 8 de la voie réception, il peut se superposer deux signaux intempestifs, qui peuvent procurer un taux d'erreurs inadmissible dans les données restituées par le circuit de décision 9. L'un de ces signaux est un signal d'écho $\varepsilon(t)$ qui est engendré par le signal émis par le modem local et qui est dû à des imperfections inévitables du circuit de couplage 4 et/ou à des réflexions de signaux dans la ligne de transmission 3. L'autre signal intempestif est un signal dit d'interférence I(t) qui est engendré par les données provenant du modem distant et émises antérieurement à chaque donnée apparaissant sur la voie réception, ce signal d'interférence étant dû à des distorsions d'amplitude et/ou de phase dont peut être affectée la ligne de transmission 3.

Pour éliminer dans la voie réception ces deux signaux intempestifs $\varepsilon(t)$ et I(t), on utilise simultanément, comme le décrit l'article précité de P. J. Van Gerwen et al., un annuleur d'écho et un égaliseur autoadaptatif ayant en commun un circuit de soustraction 11. A l'entrée (+) de ce circuit de soustraction 11, est appliqué le signal fourni par l'amplificateur 8 de la voie réception 2 et qui peut s'écrire : $s(t) + \varepsilon(t) + I(t)$. A l'entrée (—) du circuit 11, est appliqué le signal $\hat{\varepsilon}(t) + \hat{I}(t)$ qui est la somme du signal de copie d'écho $\hat{\varepsilon}(t)$ engendré par l'annuleur d'écho et du signal de copie d'interférence $\hat{I}(t)$ engendré par l'égaliseur. Lorsque la convergence de l'ensemble de l'annuleur d'écho et de l'égaliseur est réalisée, les signaux $\hat{\varepsilon}(t)$ et $\hat{I}(t)$ sont quasiment égaux aux signaux intempestifs $\varepsilon(t)$ et I(t) et à la sortie du circuit de soustraction 11, on obtient pratiquement le signal utile de données s(t) provenant du modem distant et pouvant être correctement traité par le circuit de décision 9 pour restituer les données.

L'annuleur d'écho comporte un dispositif de traitement numérique réglable 12 comprenant au moins un filtre transversal, qui reçoit le signal fourni par la source de données 5 et qui fournit sous forme numérique le signal de copie d'écho. On suppose pour l'instant que le dispositif 12 comprend un seul filtre transversal numérique fonctionnant à des instants d'échantillonnage nT (ou n pour simplifier) ayant la fréquence 1/T des données fournies par la source 5. On appelle a(n) les échantillons de données appliquées aux instants n à l'entrée du filtre constituant le dispositif 12. Ce filtre est agencé de façon usuelle pour stocker à chaque instant n, N échantillons a(n — i) appliqués à son entrée (i allant de 0 à N — 1) et pour calculer les échantillons du signal de copie d'écho $\hat{\varepsilon}(n)$ selon l'expression :

$$\hat{\varepsilon}(n) = \sum_{i=0}^{N-1} C_i \cdot a(n-i) \qquad (1)$$

$C_i$ représentant les coefficients du filtre.

Les coefficients $C_i$ sont réglables et réglés dans le circuit de réglage 13 de façon à minimiser la valeur quadratique moyenne d'un signal d'erreur $e_a$ qui est élaboré sous forme numérique dans le circuit de calcul 14. Ceci peut être obtenu dans la pratique, en réglant les coefficients $C_i$ par récurrences successives, suivant la formule de récurrence classique :

$$C_i(n + 1) = C_i(n) + \alpha \cdot a(n - i) \cdot e_a(n) \qquad (2)$$

Dans cette formule $e_a(n)$ est le signal d'erreur à l'instant n d'une récurrence n, $\alpha$ est un coefficient fixe de valeur faible par rapport à 1, qui conditionne la grandeur des modifications à apporter aux coefficients $C_i(n)$ à la récurrence n, pour obtenir les coefficients $C_i(n + 1)$ à la récurrence (n + 1).

L'égaliseur autoadaptatif comporte un filtre transversal 15, qui reçoit le signal restitué par le circuit de décision 9 et qui fournit sous forme numérique le signal de copie d'interférence. On suppose pour l'instant que le filtre numérique 15 fonctionne aux instants d'échantillonnage nT ayant la fréquence 1/T des données restituées par le circuit de décision 9. On appelle b(n) les échantillons de données appliqués aux instants n à l'entrée du filtre transversal 15. Ce filtre est agencé pour stocker à chaque instant n, M échantillons b(n — j) appliqués à son entrée (j entier allant de 1 à M) et pour calculer les échantillons du signal de copie d'interférence $\hat{I}(n)$ selon l'expression :

$$\hat{I}(n) = \sum_{j=1}^{M} G_j \cdot b(n-j) \qquad (3)$$

$G_j$ représentant les coefficients du filtre.

Les coefficients $G_j$ sont réglables et réglés dans le circuit de réglage 16, par récurrences successives,

3

suivant une formule de récurrence analogue à la formule (2) ci-dessus :

$$G_j(n + 1) = G_j(n) + \beta \cdot b(n - j) \cdot e_g(n) \qquad (4)$$

Dans cette formule $\beta$ est un coefficient fixe de valeur faible par rapport à 1, $e_g(n)$ est le signal d'erreur qui est utilisé pour le réglage des coefficients de l'égaliseur et qui est élaboré dans le circuit de calcul 14.

Les signaux numériques $\hat{\varepsilon}(n)$ et $\hat{I}(n)$ sont additionnés dans le circuit additionneur 17 et le signal de somme obtenu est converti en analogique à l'aide du convertisseur numérique-analogique 18 qui fournit le signal de correction $\hat{\varepsilon}(t) + \hat{I}(t)$ qui est appliqué à l'entrée (—) du circuit de soustraction 11.

Le signal r(t) fourni par le circuit de soustraction 11 est échantillonné dans le circuit d'échantillonnage et de maintien 19, à l'aide du signal d'échantillonnage $H_a$ ayant une fréquence $F_a$ répondant sensiblement au théorème de Shannon vis-à-vis du signal émis par le modem. Par exemple dans le cas d'un signal émis codé en biphase et dont la majeure partie de l'énergie se trouve dans la bande [0-2F], on peut choisir une fréquence d'échantillonnage $F_a$ au moins égale à 4F. Pour simplifier les explications, on se place par la suite dans le cas d'un signal émis codé en biphase, avec une fréquence d'échantillonnage $F_a$ égale à 4F. Le signal ainsi échantillonné fourni par le circuit 19 est appliqué, outre au circuit de décision 9 et au circuit de calcul d'erreur 14, à un circuit de récupération d'horloge 20, qui fournit le signal d'horloge récupérée H de fréquence F. Ce circuit de récupération d'horloge 20 est construit de façon connue en soi, à l'aide par exemple d'une boucle de phase numérique, pour synchroniser une horloge locale sur les transitions du signal r(t), échantillonné dans le circuit d'échantillonnage 19. Dans le cas d'un codage du signal émis en biphase, le signal r(t) comporte deux transitions pour chaque période T de bit.

Du signal d'horloge récupérée H de fréquence F = 1/T fournie par le circuit 20, sont déduits dans le circuit 21 différents signaux et fréquences de commande servant au fonctionnement de l'annuleur d'écho et de l'égaliseur. Le circuit 21 fournit le signal $H_a$ ayant la fréquence d'échantillonnage $F_a$ qui commande le circuit d'échantillonnage et de maintien 19 et qui peut être égale à 4F dans le cas d'un codage en biphase.

Dans le récepteur de l'invention, le signal de copie d'écho est engendré par le dispositif de traitement numérique 12 avec la fréquence d'échantillonnage $F_a$. Avec une fréquence d'échantillonnage $F_a = 4F$, on sait que l'on peut réaliser le dispositif de traitement 12, au moyen de quatre filtres transversaux identiques non représentés travaillant sur le signal de données a(n) fourni par la source 5, avec des signaux d'échantillonnage $H_0$ à $H_3$ fournis par le circuit 21. Ces signaux d'échantillonnage $H_0$ à $H_3$ ont la même fréquence 1/T et sont décalés successivement entre eux de T/4. Les quatre filtres transversaux dont est composé le dispositif 12 forment respectivement, suivant la formule (1), des signaux de copie d'écho $\hat{\varepsilon}(n)$, $\hat{\varepsilon}_1(n)$, $\hat{\varepsilon}_2(n)$, $\hat{\varepsilon}_3(n)$ qui, sous la commande des signaux $H_0$, $H_1$, $H_2$, $H_3$, sont échantillonnés successivement à des instants décalés entre eux de 1/T. Les signaux de copie d'écho $\hat{\varepsilon}_0(n)$ à $\hat{\varepsilon}_3(n)$ sont multiplexés pour former à la sortie du dispositif de traitement 12 le signal de copie d'écho $\hat{\varepsilon}(n)$ échantillonné à la fréquence $F_a = 4F$. Pour modifier les coefficients des quatre filtres transversaux dont est composé le dispositif 12, on calcule dans le circuit de calcul 14, le signal d'erreur $e_a$ de l'annuleur d'écho à la fréquence d'échantillonnage $F_a = 4F$. Ce signal d'erreur est appliqué au circuit de réglage 13 pour y être réparti dans le temps et former quatre signaux d'erreur $e_{a0}$ à $e_{a3}$ échantillonnés chacun à la fréquence F = 1/T. Les coefficients des quatre filtres transversaux du dispositif 12, sont réglés par récurrences successives suivant la formule de récurrence (2), en utilisant respectivement pour ces filtres les signaux d'erreur $e_{a0}$ à $e_{a3}$.

Avec un signal de copie d'écho $\hat{\varepsilon}(n)$ formé comme on vient de le décrire en utilisant une fréquence d'échantillonnage $F_a = 4F$, le signal d'écho $\varepsilon(t)$ est susceptible d'être annulé dans une large bande allant de 0 à 2F, dans laquelle se trouve la majeure partie d'un signal de données de fréquence 1/T codé en biphase. En ce qui concerne l'égaliseur, on a constaté qu'il n'est pas indispensable de former le signal de copie d'interférence $\hat{I}(n)$ avec une fréquence d'échantillonnage aussi élevée que celle utilisée pour former le signal de copie d'écho. Dans l'exemple d'un signal codé en biphase, on peut utiliser pour former le signal $\hat{I}(n)$ une fréquence d'échantillonnage $F_g = 2F$. Dans ce cas, le filtre transversal 15 de l'égaliseur reçoit le signal $H_g$ de fréquence $F_g$ fourni par le circuit 21, pour échantillonner à cette fréquence le signal de données b(n) restitué par le circuit de décision 9. Dans le filtre 15, les échantillons du signal de copie d'interférence $\hat{I}(n)$ sont calculés à cette fréquence $F_g = 2F$, suivant une formule analogue à la formule (3). Pour modifier les coefficients du filtre 15, on calcule dans le circuit de calcul 14 le signal d'erreur $e_g$ de l'égaliseur à la fréquence d'échantillonnage $F_g = 2F$. Ce signal d'erreur $e_g$ est appliqué au circuit de réglage 16, dans lequel les coefficients du filtre 15 sont réglés par récurrences successives suivant la formule de récurrence (4).

Avec un récepteur ainsi constitué dans lequel le signal fourni par le circuit de soustraction 11 est échantillonné à la fréquence de Shannon avant d'être appliqué simultanément au circuit de récupération d'horloge 20 et au circuit 14 formant les signaux d'erreur pour l'annuleur d'écho et l'égaliseur, et dans lequel au moins l'annuleur d'écho fonctionne à cette fréquence d'échantillonnage de Shannon, on a constaté ce résultat assez surprenant que l'on obtient rapidement la convergence de l'ensemble, ce qui se traduit par une horloge récupérée stable et l'annulation des signaux intempestifs d'écho et d'interférence.

On obtient un fonctionnement particulièrement satisfaisant lorsque l'on utilise, pour le réglage des coefficients des filtres transversaux de l'annuleur d'écho et de l'égaliseur, des signaux d'erreur formés de la manière décrite dans la demande de brevet européen EP-A-0 107 233 publiée le 2 mai 1984, concernant un annuleur d'écho et dans la demande de brevet européen EP-A-0 106 406 publiée le 25 avril 1984, concernant un égaliseur. Selon ces demandes de brevet au nom de la demanderesse, les coefficients de filtre d'un annuleur d'écho ou d'un égaliseur sont modifiés à l'aide d'un signal d'erreur qui est déterminé à un présent instant d'échantillonnage en formant la différence entre la valeur du signal reçu corrigé (de l'écho ou des interférences) à cet instant d'échantillonnage et la valeur de ce signal corrigé à un instant d'échantillonnage antérieur, cette dernière valeur de signal corrigé ayant été préalablement multipliée par le rapport de la valeur du signal de données restitué au présent instant d'échantillonnage à la valeur du signal de données restitué à l'instant d'échantillonnage antérieur ; la modification des coefficients est effectuée ou non selon que les deuxdites valeurs du signal de données restitué sont différentes de zéro ou au moins l'une de ces valeurs est égale à zéro. Si le présent instant d'échantillonnage et l'instant d'échantillonnage antérieur qui est utilisé pour le calcul du signal d'erreur et qui n'est pas forcément le plus proche sont séparés par la période T des données, le signal d'erreur $e(n)$ au présent instant d'échantillonnage $nT$ (ou $n$ pour simplifier) peut s'écrire :

$$e(n) = r(n) - r(n-1) \cdot b(n)/b(n-1) \qquad (5)$$

$r(n)$ et $r(n-1)$ étant les valeurs du signal reçu corrigé aux instants d'échantillonnage $n$ et $n-1$,
$b(n)$ et $b(n-1)$ étant les valeurs du signal de données restitué aux instants d'échantillonnage $n$ et $n-1$.

Dans le cas où le signal de données émis par le modem distant est à deux niveaux ou résulte d'un codage pseudoternaire de données à deux niveaux, le signal de données restitué par le circuit de décision a deux niveau positif et négatif, caractérisés par le signe du signal corrigé. On a donc dans ce cas $b(n) = Sgn\ [r(n)]$ et $b(n-1) = Sgn\ [r(n-1)]$, $Sgn\ []$ signifiant « Signe de [] ». Dans ce cas, la formule (5) ci-dessus peut s'écrire :

$$e(n) = r(n) - r(n-1 \cdot Sgn\ [r(n)] \cdot Sgn\ [r(n-1)] \qquad (6)$$

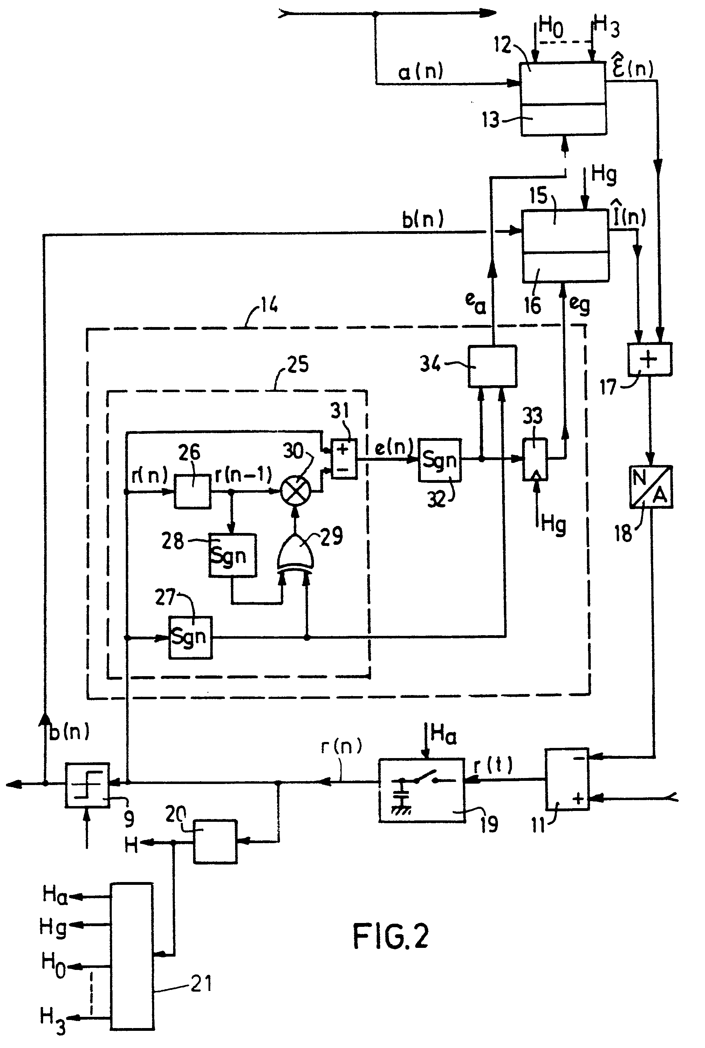

La figure 2 représente un mode de réalisation d'un récepteur conforme à l'invention, utilisant pour le réglage des coefficients de filtre de l'annuleur d'écho et de l'égaliseur, un signal d'erreur formé selon le procédé des deux demandes de brevet précitées. A titre d'exemple, on s'est placé sur la figure 2, dans le cas où le signal de données restitué a deux niveaux positif et négatif de sorte que la formule (6) s'applique et que les modification des coefficients sont toujours effectuées, puisque le signal de données restitué n'a jamais le niveau zéro. Sur la figure 2, les éléments ayant la même fonction que sur la figure 1 sont référencés de la même manière.

On suppose dans l'exemple décrit par la figure 2, que dans le circuit d'échantillonnage 19, le signal reçu corrigé $r(t)$ est échantillonné à une fréquence $F_a$ égale à 4 fois la fréquence $1/T$ des données, de sorte que les instants d'échantillonnage $t_a$ peuvent s'écrire : $t_a = n(1 + q/4)T$, $n$ étant un entier allant de $-\infty$ à $+\infty$ et $q$ prenant les valeurs 0, 1, 2, 3. Dans le circuit de décision 9, les données $b(n)$ sont restituées à la fréquence $1/T$ aux instants $nT$, sous la forme des quantités $Sgn\ [r(n)]$. Le signal d'erreur $e(n)$ est à calculer à la fréquence $F_a$ à tous les instants d'échantillonnage $t_a$.

Le circuit 14 comporte une partie 25 qui calcule ce signal d'erreur $e(n)$. Cette partie de circuit 25 comprend un circuit de retard 26 produisant un retard $T$ et qui est connecté à la sortie du circuit d'échantillonnage 19, de sorte qu'à un instant caractérisé par $n$ on obtient aux deux bornes du circuit 26 les valeurs $r(n)$ et $r(n-1)$ du signal $r(t)$. Les circuits 27 et 28 sont connectés respectivement à l'entrée et à la sortie du circuit 26 et sont formés comme le circuit de décision 9, à l'aide par exemple d'un circuit comparateur dont la borne d'entrée inverseuse est au potentiel zéro, de sorte qu'ils fournissent respectivement les quantités $Sgn\ [r(n)]$ et $Sgn\ [r(n-1)]$. Le circuit OU exclusif 29 forme le produit $Sgn\ [r(n)] \cdot Sgn\ [r(n-1)]$. Le circuit multiplicateur 30 forme le produit $r(n-1) \cdot Sgn\ [r(n)] \cdot Sgn\ [r(n-1)]$ et le circuit de soustraction 31 dont l'entrée (+) est connectée à l'entrée du circuit de retard 26 et l'entrée (—) est connectée à la sortie du circuit multiplicateur 30, forme le signal d'erreur $e(n)$ conformément à la formule (6).

Dans le mode de réalisation du récepteur représenté sur la figure 2, on n'utilise pas directement le signal d'erreur $e(n)$ ainsi formé pour le réglage des coefficients de filtre de l'annuleur d'écho et de l'égaliseur. Tout d'abord selon une méthode connue permettant de simplifier les calculs des coefficients, on n'utilise que le signe du signal d'erreur, c'est-à-dire la quantité $Sgn\ [e(n)]$ qui est formée dans le circuit 32.

En ce qui concerne l'égaliseur, on utilise pour le réglage des coefficients du filtre 15, le signal $e_g$ formé en ne retenant qu'une sur deux des quantités $Sgn\ [e(n)]$ formées à la fréquence d'échantillonnage $F_a$, cette opération étant réalisée à l'aide d'une bascule 33 qui est connectée à la sortie du circuit 32 et dont l'entrée d'horloge reçoit le signal $H_g$ de fréquence $F_g = F_a/2$. De cette manière le signal $e_g$ servant à régler les coefficients du filtre transversal 15 selon la formule (4) est engendré avec la même fréquence d'échantillonnage $F_g$ que celle du signal de copie d'interférence $\hat{I}(n)$.

Pour l'annuleur d'écho dans lequel le signal de copie d'écho $\tilde{\epsilon}(n)$ est engendré à la fréquence $F_a$ à l'aide de quatre filtres transversaux formant le dispositif 12 comme on l'a expliqué, on pourrait utiliser directement le signal Sgn [e(n)] formé avec la fréquence d'échantillonnage $F_a$ pour régler les coefficients de ces filtres. Mais, conformément à un mode de réalisation de l'annuleur d'écho décrit dans la demande de brevet EP-A-0 107 233 on utilise pour régler ces coefficients selon la formule (2) un signal $e_a$ formé de la façon suivante dans le dispositif logique 34. Ce dispositif 34 reçoit sur une entrée le signal Sgn [e(n)] fourni par le circuit 32 et sur une autre entrée le signal Sgn [r(n)] fourni par le circuit 27. Le dispositif 34 est agencé pour fournir un signal $e_a$ à deux bits, le nombre représenté par ces deux bits étant égal à zéro quand les quantités Sgn [e(n)] et Sgn [r(n)] ont des valeurs différentes et égal à + 1 ou — 1 quand les quantités Sgn [e(n)] et Sgn [r(n)] ont la même valeur + 1 ou — 1. Comme on l'a montré dans la demande de brevet EP-A-0 107 233, l'action du signal Sgn [r(n)] pour la diminution du signal d'écho résiduel est prépondérante lorsque le signal d'écho $\epsilon$(t) a un niveau plus élevé que le signal utile reçu s(t), c'est-à-dire en pratique au début de la convergence de l'annuleur d'écho. L'action du signal Sgn [e(n)] est prépondérante lorsque le signal d'écho $\epsilon$(t) a un niveau plus faible que le signal utile reçu s(t) et conduit pratiquement à l'annulation complète du signal d'écho résiduel.

**Revendications**

1. Récepteur utilisé dans un modem de transmission de données pour restituer, à partir du signal en bande de base de la voie réception, le signal de données transmis par le modem distant, ce récepteur comportant un annuleur d'écho muni d'un dispositif de traitement réglable comprenant au moins un filtre transversal et recevant un signal de la voie émission, un égaliseur autoadaptatif muni d'un filtre transversal recevant le signal de données restitué par le circuit de décision du récepteur, un circuit de soustraction pour soustraire dudit signal en bande de base de la voie de réception les signaux de copie d'écho et de copie d'interférences engendrés dans l'annuleur d'écho et l'égaliseur, et des moyens pour échantillonner le signal de sortie du circuit de soustraction selon une première fréquence répondant au théorème de Shannon vis-à-vis du signal à traiter par le modem et un circuit de récupération d'horloge de données reçues, recevant le signal échantillonné, caractérisé en ce que cette première fréquence fixe la cadence d'apparition du signal de copie d'écho, tandis qu'une deuxième fréquence inférieure à la première fixe la cadence d'apparition du signal de copie d'interférence.

2. Récepteur selon la revendication 1, caractérisé en ce que la deuxième fréquence est au moins égale à la moitié de la première fréquence.

3. Récepteur selon l'une des revendications 1 ou 2, caractérisé en ce que l'annuleur d'écho est formé d'un nombre de filtres transversaux correspondant à la première fréquence, travaillant chacun avec des signaux décalés dans le temps, de fréquence fixée par la fréquence des données fournies par la source pour fournir des signaux partiels de copie d'écho et en ce qu'il est prévu un circuit de combinaison pour fournir le signal de copie d'écho à partir des signaux partiels de copie d'écho.

4. Récepteur selon l'une des revendications 1 à 3, caractérisé en ce que les coefficients de filtre de l'annuleur d'écho et de l'égaliseur sont réglés à l'aide de signaux d'erreur déduits d'un signal qui est déterminé à un présent instant d'échantillonnage en formant la différence entre la valeur du signal de sortie du circuit de soustraction à cet instant d'échantillonnage et la valeur de ce signal à un instant d'échantillonnage antérieur, préalablement multipliée par le rapport de la valeur du signal de données restitué au présent instant d'échantillonnage à la valeur du signal de données restitué à l'instant d'échantillonnage antérieur, la modification des coefficients étant effectuée ou non selon que les deux dites valeurs du signal de données restitué sont différentes de zéro ou au moins l'une de ces deux valeurs est égale à zéro.

**Claims**

1. A receiver used in a data transmission modem for recovering, from the baseband signal of the receive path, the data signal transmitted by the remote modem, this receiver comprising an echo canceller incorporating an adjustable processing arrangement comprising at least one transversal filter and receiving a signal from the transmit path, a self-adaptive equalizer comprising a transversal filter receiving the data signal recovered by the decision circuit of the receiver, and a subtracting circuit for subtracting from the baseband signal of the receive path the synthetic echo and synthetic interference signals generated in the echo canceller and the equalizer, and means for sampling the output signal of the subtracting circuit at a first frequency complying with Shannon's theorem in respect of the signal to be processed by the modem and a circuit for recovering the clock of received date, receiving the sampled signal, characterized in that this first frequency determines the rate at which the synthetic echo signal appears, whilst a second frequency, lower than the first frequency determines the rate at which the synthetic interference signal appears.

2. A receiver as claimed in Claim 1, characterized in that the second frequency is at least equal to half the first frequency.

3. A receiver as claimed in Claim 1 or 2, characterized in that the echo canceller is constituted by a number of transversal filters corresponding to the first frequency, each operating with time-shifted signals of a frequency fixed by the frequency of the data supplied by the source for producing partial synthetic echo signals, and in that a combining circuit is provided for producing the synthetic echo signal from the partial synthetic echo signals.

4. A receiver as claimed in Claims 1 to 3, characterized in that the filter coefficients of the echo canceller and the equalizer are adjusted by means of error signals derived from a signal determined at a present sampling instant by forming the difference between the value of the output signal of the subtracting circuit at that sampling instant and the value of this signal at a previous sampling instant, previously multiplied by the ratio between the value of the recovered data signal at the present sampling instant and the value of the recovered data signal at the previous sampling instant, the coefficients being modified or not modified depending on whether the said two values of the recovered data signal differ from zero or at least one of these two values is equal to zero.

## Patentansprüche

1. Empfänger in einem Datenübertragungsmodem zum ausgehend vom Basisbandsignal der Empfangsstrecke Wiedergewinnen des von dem Fernmodem übertragenen Datensignals, wobei dieser Empfänger einen Echokompensator mit einer einstellbaren Verarbeitungsanordnung enthallt, die wenigstens ein Transversalfilter aufweist und ein Signal der Sendestrecke erhält, weiterhin einen selbstanpassenden Entzerrer mit einem Transversalfilter, der das mit Hilfe der Entscheidungsschaltung des Empfängers wiedergewonnene Datensignal erhält, sowie eine Subtrahierschaltung zum von dem Basisbandsignal der Empfangsstrecke Subtrahieren des Echokopie- und des Interferenzkopiesignals, welche Signale in dem Echokompensator bzw. Entzerrer erzeugt worden sind, und Mittel zum Abtasten des Ausgangssignals der Subtrahierschaltung gemäss einer ersten dem Theorem von Shannon in bezug auf das von dem Modem zu verarbeitende Signal entsprechenden Frequenz und eine Schaltungsanordnung zum Rückgewinnen des Taktsignals der empfangenen Daten, die das abgetastete Signal erhält, dadurch gekennzeichnet, dass diese erste Frequenz den Auftrittstakt des Echokopiesignals festlegt, während eine zweite Frequenz, die niedriger ist als die erste Frequenz, den Auftrittstakt des Interferenzkopiesignals festlegt.

2. Empfänger nach Anspruch 1, dadurch gekennzeichnet, dass die zweite Frequenz wenigstens gleich der Hälfte der ersten Frequenz ist.

3. Empfänger nach einem der Ansprüche 1 oder 2, dadurch gekennzeichnet, dass der Echokompensator aus einer Anzahl Transversalfilter entsprechend der ersten Frequenz gebildet ist, die je mit zeitverschobenen Signalen arbeiten, deren Frequenz durch die Frequenz der von der Quelle gelieferten Daten festgelegt ist, zum Liefern von Teilechokopiesignalen und dass eine Kombinationsschaltungs vorgesehen ist zum Liefern des Echokopiesignals ausgehend von den Teilechokopiesignalen.

4. Empfänger nach einem der Ansprüche 1 bis 3, dadurch gekennzeichnet, dass die Filterkoeffizienten des Echokompensators und des Entzerrers mit Hilfe von Fehlersignalen geregelt werden, die von einem Signal abgeleitet worden sind, das zu einem Abtastzeitpunkt durch das Bilden der Differenz zwischen dem Ausgangssignalwert der Subtrahierschaltung zu dem betreffenden Abtastzeitpunkt und dem Wert dieses Signals zu einem vorhergehenden Abtastzeitpunkt bestimmt wird, wobei dieser letzte Wert vorher mit dem Verhältnis des Wertes des wiedergewonnenen Datensignals zu dem betreffenden Abtastzeitpunkt zu dem Wert des wiedergewonnenen Datensignals zu dem vorhergehenden Abtastzeitpunkt multipliziert worden ist, wobei die Änderung der Koeffizienten wohl oder nicht durchgeführt wird je nachdem die zwei genannten Werte des wiedergewonnenen Datensignals von Null abweichen oder ob wenigstens einer dieser Werte gleich Null ist.

FIG.1

FIG.2

2